(19) Europäisches Patentamt / European Patent Office / Office européen des brevets

(11) **EP 4 246 617 A1**

(12) **EUROPEAN PATENT APPLICATION**

(43) Date of publication:
20.09.2023 Bulletin 2023/38

(21) Application number: 23155304.1

(22) Date of filing: 07.02.2023

(51) International Patent Classification (IPC):
$H01M\ 4/1391$ (2010.01)  $C01G\ 53/00$ (2006.01)
$H01M\ 4/36$ (2006.01)  $H01M\ 4/525$ (2010.01)
$H01M\ 4/62$ (2006.01)  $H01M\ 10/052$ (2010.01)
$H01M\ 10/42$ (2006.01)

(52) Cooperative Patent Classification (CPC):
H01M 4/1391; C01G 53/44; H01M 4/366;
H01M 4/525; H01M 4/62; H01M 10/052;
H01M 10/4235

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.03.2022 JP 2022042622

(71) Applicant: TOYOTA JIDOSHA KABUSHIKI
KAISHA
Aichi-Ken 471-8571 (JP)

(72) Inventor: KUBOTA, Masaru
Toyota-shi, 471-8571 (JP)

(74) Representative: D Young & Co LLP
120 Holborn
London EC1N 2DY (GB)

(54) **COMPOSITE PARTICLE, POSITIVE ELECTRODE, ALL-SOLID-STATE BATTERY, AND METHOD FOR PRODUCING COMPOSITE PARTICLE**

(57)    A composite particle (5) includes a positive electrode active material particle (1) and a coating film (2). The coating film (2) covers at least a part of a surface of the positive electrode active material particle (1). The coating film (2) includes a phosphorus compound. The phosphorus compound includes either or both of a first element and a second element, and phosphorus. The first element is a glass network-forming element. The second element is a transition element. The relationship of $C_{Li}/(C_P + C_{E1} + C_{E2}) \leq 2.5$ is satisfied, where $C_{Li}$, $C_P$, $C_{E1}$, and $C_{E2}$ represent elemental concentrations obtained by measuring the composite particle by X-ray photoelectron spectroscopy, $C_{Li}$ represents an elemental concentration of lithium, $C_P$ represents an elemental concentration of phosphorus, $C_{E1}$ represents an elemental concentration of the first element, and $C_{E2}$ represents an elemental concentration of the second element.

FIG. 1

EP 4 246 617 A1

**Description**

BACKGROUND OF THE INVENTION

1. Field of the Invention

The present disclosure relates to composite particles, positive electrodes, all-solid-state batteries, and methods of producing a composite particle.

2. Description of Related Art

Japanese Unexamined Patent Application Publication No. 2003-338321 (JP 2003-338321 A) discloses that an inorganic solid electrolyte film is formed between a positive electrode material and an organic electrolyte.

SUMMARY OF THE INVENTION

Sulfide-based all-solid-state batteries (hereinafter sometimes simply referred to as "all-solid-state batteries") have been under development. All-solid-state batteries include a sulfide solid electrolyte. When the sulfide solid electrolyte directly contacts positive electrode active material particles, the sulfide solid electrolyte can degrade. Degradation of the sulfide solid electrolyte (ionic conduction paths) can increase the battery resistance. It has therefore been proposed to form a coating film on the surfaces of the positive electrode active material particles. The coating film inhibits direct contact between the positive electrode active material particles and the sulfide solid electrolyte, so that degradation of the sulfide solid electrolyte can be reduced.

$LiNbO_3$ and $Li_3PO_4$ are known as materials for the coating film. LiNbOs can have lower resistance than $Li_3PO_4$. Therefore, LiNbOs is becoming more widely used. According to the new findings of the present disclosure, however, $Li_3PO_4$ is superior to $LiNbO_3$ in terms of durability under high voltage. It is therefore desired to develop a phosphorus-based coating film with low resistance.

The present disclosure provides a phosphorus-based coating film with low resistance.

Hereinafter, technical configurations and functions and effects of the present disclosure will be described. An action mechanism according to the present specification includes estimation. The action mechanism does not limit the technical scope of the present disclosure.

A composite particle according to a first aspect of the present disclosure includes a positive electrode active material particle and a coating film. The coating film covers at least a part of a surface of the positive electrode active material particle. The coating film includes a phosphorus compound. The phosphorus compound includes either or both of a first element and a second element, and phosphorus. The first element is a glass network-forming element. The second element is a transition element. A relationship given by the following formula (1) is satisfied,

$$C_{Li}/(C_P + C_{E1} + C_{E2}) \leq 2.5 \quad (1).$$

$C_{Li}$, $C_P$, $C_{E1}$, and $C_{E2}$ represent elemental concentrations obtained by measuring the composite particle by X-ray photoelectron spectroscopy (XPS).
$C_{Li}$ represents an elemental concentration of lithium (Li).
$C_P$ represents an elemental concentration of phosphorus (P).
$C_{E1}$ represents an elemental concentration of the first element (E1).
$C_{E2}$ represents an elemental concentration of the second element (E2).

A composition ratio of Li at a surface of the composite particle is considered to reflect a composition ratio of Li in the coating film. The composition ratio of Li at the particle surface can be identified by XPS.

In a phosphorus-based coating film of $Li_3PO_4$, the composition ratio of Li given by "$C_{Li}/(C_P + C_{E1} + C_{E2})$" is 3.0. In $Li_3PO_4$, $Li^+$ is considered to be a carrier. Therefore, the more the carriers, the higher the ionic conduction is expected to be. In other words, the higher the composition ratio of Li in the phosphorus compound, the lower the battery resistance is expected to be.

According to the new findings of the present disclosure, however, ionic conduction as high as or higher than that of $LiNbO_3$ may be achieved by adding a specific element to a phosphorus compound in which the composition ratio of Li is low. That is, the composite particle satisfies the relationship given by the above formula (1), and the phosphorus compound includes at least one selected from the group consisting of the first element and the second element.

The first element is a glass network-forming element. The first element may form an oxide glass with a network structure by bonding with oxygen (O). The coating film (phosphorus compound) may be considered to be an oxide. A plurality of types of anions such as "$PO_X^{a-}$," "$BO_y^{b-}$," and "$SiO_z^{c-}$" can be formed in the phosphorus compound by adding the first element to the phosphorus compound. A mixed anion effect can occur because the plurality of types of anions coexists. Carrier (cation) migration can be facilitated by the mixed anion effect. Moreover, as the number of carriers may be small, carrier migration is considered to be further facilitated.

The second element is a transition element. The transition element has a larger ionic radius than P. Crystallization of the phosphorus compound can be inhibited by adding the second element to the phosphorus compound. That is, partial structural defects (disorders) can be introduced into the phosphorus compound. Carrier migration can be facilitated by such introduction of the structural defects. Moreover, as the number of carriers may be small, carrier migration is considered to be further facilitated.

Due to the above functions or synergy of the above functions, the phosphorus-based coating film of the present disclosure can have resistance as low as or lower than that of LiNbOs. As the phosphorus-based coating film has low resistance, both durability under high voltage and high output are expected to be achieved.

In the composite particle according to the first aspect of the present disclosure, the first element may include at least one selected from the group consisting of boron (B), silicon (Si), nitrogen (N), sulfur (S), germanium (Ge), and hydrogen (H).

In the composite particle according to the first aspect of the present disclosure, the first element may include at least one selected from the group consisting of B and Si.

In the composite particle according to the first aspect of the present disclosure, the second element may include at least one element selected from the group consisting of second transition series elements and third transition series elements.

In the composite particle according to the first aspect of the present disclosure, the second element may include at least one selected from the group consisting of lanthanum (La), cerium (Ce), and yttrium (Y).

In the composite particle according to the first aspect of the present disclosure, a coverage obtained from a result of measuring the composite particle by the X-ray photoelectron spectroscopy may be 85% or more, the coverage indicating a percentage of the surface of the positive electrode active material particle covered by the coating film. The coverage may be measured by XPS.

As the coverage may be 85% or more, the battery resistance, for example, is expected to be reduced.

In the composite particle according to the first aspect of the present disclosure, the phosphorus compound may include the first element and the second element.

A positive electrode according to a second aspect of the present disclosure may include the composite particle according to the first aspect of the present disclosure and a sulfide solid electrolyte.

An all-solid-state battery according to a third aspect of the present disclosure may include the positive electrode according to the second aspect of the present disclosure.

A method for producing a composite particle according to a fourth aspect of the present disclosure includes the following (a) and (b).

(a) Preparing a mixture by mixing a coating solution and a positive electrode active material particle.
(b) Producing the composite particle by drying the mixture.

The coating solution includes a solute and a solvent. The solute includes either or both of a first element and a second element, and phosphorus. The first element is a glass network-forming element. The second element is a transition element.

A coating film can be formed as the coating solution on the surface of the positive electrode active material particle dries. The coating film of the composite particle according to the first aspect of the present disclosure can be produced by the coating solution described in the method for producing a composite particle according to the fourth aspect of the present disclosure.

In the method for producing a composite particle according to the fourth aspect of the present disclosure, the solute may include a phosphate compound.

In the method for producing a composite particle according to the fourth aspect of the present disclosure, the first element may include at least one selected from a group consisting of B, Si, N, S, Ge, and H.

In the method for producing a composite particle according to the fourth aspect of the present disclosure, the first element may include at least one selected from the group consisting of B and Si.

In the method for producing a composite particle according to the fourth aspect of the present disclosure, the second element may include at least one element selected from the group consisting of second transition series elements and third transition series elements.

In the method for producing a composite particle according to the fourth aspect of the present disclosure, the second element may include at least one selected from a group consisting of La, Ce, and Y.

In the method for producing a composite particle according to the fourth aspect of the present disclosure, the coating solution may satisfy a relationship given by the following formula (2),

$$0.040 < (n_{E1} + n_{E2})/n_P \leq 1.51 \quad (2)$$

where $n_P$ represents a molar concentration of P in the coating solution, $n_{E1}$ represents a molar concentration of the first element in the coating solution, and $n_{E2}$ represents a molar concentration of the second element in the coating solution.

In the formula (2), "$(n_{E1} + n_{E2})/n_P$" represents the molar ratio (amount-of-substance ratio) of the sum of the first element (E1) and the second element (E2) to P in the coating solution. The battery resistance is expected to be reduced when the molar ratio is higher than 0.040 and 1.51 or less.

In the method for producing a composite particle according to the fourth aspect of the present disclosure, the solute may include the first element and the second element.

Hereinafter, an embodiment of the present disclosure (hereinafter sometimes simply referred to as the "embodiment") and examples of the present disclosure (hereinafter sometimes simply referred to as the "examples") will be described. The embodiment and the examples are not intended to limit the technical scope of the present disclosure.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram of a composite particle according to an embodiment;
FIG. 2 is a conceptual diagram of an all-solid-state battery according to the embodiment;
FIG. 3 is a schematic flowchart of a method for producing a composite particle according to the embodiment;
FIG. 4 is a first graph showing the relationship between the composition ratio of Li at the particle surface and the battery resistance; and
FIG. 5 is a second graph showing the relationship between the composition ratio of Li at the particle surface and the battery resistance.

DETAILED DESCRIPTION OF EMBODIMENTS

Definition of Terms, etc.

The terms "comprise," "include," "have," and variations thereof (e.g., "composed of') are open-ended. When any of the open-ended terms is used, it means that additional elements may or may not be included in addition to essential elements. The term "consist of" is closed-ended. Even when the closed-ended term is used, it does not mean that additional elements such as normally accompanying impurities and elements irrelevant to the technique of the present disclosure are excluded. The term "substantially consist of" is semi-closed-ended. When the semi-closed-ended term is used, it means that it is allowed to add elements that do not substantially affect the basic and novel characteristics of the technique of the present disclosure.

"Either or both of A and B" includes "A or B" and "A and B." "Either or both of A and B" can also be written as "A and/or B."

The words such as "may" and "can" are used in a permissive sense, meaning that "it is possible," rather than in a mandatory sense, meaning "must."

Elements in a singular form can also be plural unless otherwise specified. For example, the term "particle" can mean not only "one particle" but also an "agglomerate of particles (powder, powdery material, or group of particles)."

The order in which a plurality of steps, actions, operations, etc. included in various methods is performed is not limited to the order described herein unless otherwise specified. For example, a plurality of steps may proceed in parallel. For example, the order of a plurality of steps may be reversed.

The numerical ranges such as "m% to n%" are inclusive ranges including their upper and lower limit values unless otherwise specified. That is, "m% to n%" indicates the numerical range of "m% or more and n% or less." Further, "m% or more and n% or less" includes "more than m% and less than n%." A numerical value selected as desired from the numerical range may be set to a new upper limit value or a new lower limit value. For example, a new numerical range may be set by combining as desired a numerical value in the numerical range and a numerical value shown in a different part of the present specification, in a table, in the drawings, etc.

All numerical values should be interpreted as having the term "about" in front of them. The term "about" can mean, for example, ±5%, ±3%, ±1%, etc. All numerical values can be approximate values that can change depending on the manner in which the technique of the present disclosure is used. All numerical values can be expressed in significant figures. A measured value can be an average of a plurality of measurements. The number of measurements may be three or more, five or more, or 10 or more. Typically, the larger the number of measurements, the higher the reliability of the average is expected to be. A measured value can be rounded off based on the number of significant figures. A measured value can include a variation etc. associated with, for example, the detection limit of a measuring device.

Geometric terms (e.g., "parallel," "perpendicular," and "orthogonal") should not be interpreted in a strict sense. For example, the term "parallel" may refer to the state deviating slightly from "parallel" in a strict sense. When any geometric term is used, it can include, for example, tolerance, variation, etc. in terms of design, work, manufacturing, etc. The dimensional relationships in the drawings may not match the actual dimensional relationships. The dimensional relationships (length, width, thickness, etc.) in the drawings may have been changed in order to facilitate understanding of the technique of the present disclosure. Moreover, a part of the configurations may be omitted.

When a compound is represented by a stoichiometric composition formula (e.g., "$LiCoO_2$"), the stoichiometric composition formula is merely a representative example of the compound. The compound may have a non-stoichiometric composition. For example, when lithium cobalt oxide is represented by "$LiCoO_2$," lithium cobalt oxide is not limited to the composition ratio of "Li:Co:O = 1:1:2" and can contain lithium (Li), cobalt (Co), and oxygen (O) in any composition ratio, unless otherwise specified. Moreover, doping with a trace element, substitution with a trace element, etc. can be allowed.

"D50" indicates the particle size at which the cumulative frequency reaches 50% in a volume-based particle size distribution when counted from the smallest particle size. D50 can be measured by a laser diffraction method.

The "glass network-forming element" refers to an element with a glass-forming ability. The "glass-forming ability" means that a relevant element can form an oxide glass with a network structure by bonding with oxygen (O). Hereinafter, the first element is sometimes abbreviated as "E1."

"Transition elements" are elements that includes group 3 elements to group 11 elements in the periodic table. Hereinafter, the second element is sometimes abbreviated as "E2."

XPS Measurement

Composition Ratio of Li at Particle Surface

The composition ratio of Li at the particle surface, "$C_{Li}/(C_P + C_{E1} + C_{E2})$, can be measured by the following procedure. An XPS instrument is prepared. For example, an XPS instrument "product name: PHI X-tool" made by ULVAC-PHI, Inc. (or an equivalent product) may be used. Sample powder made of composite particles is placed in the XPS instrument. Narrow scan analysis is performed with pass energy of 224 eV. Measurement data is processed by analysis software. For example, analysis software "product name: MulTiPak" made by ULVAC-PHI, Inc. (or an equivalent product) may be used. The peak area (integral value) of the Li1s spectrum is converted to the elemental concentration of Li ($C_{Li}$). The peak area of the P2p spectrum is converted to the elemental concentration of P ($C_P$). For E1 and E2, appropriate spectra are selected according to the type of element. For example, when E1 is boron (B), the peak area of the B1s spectrum is converted to the elemental concentration of B ($C_{E1}$). For example, when E2 is lanthanum (La), the peak area of the La3d5 spectrum is converted to the elemental concentration of La ($C_{E2}$). The composition ratio of Li at the particle surface is obtained by dividing $C_{Li}$ by the sum of Cr, $C_{E1}$, and $C_{E2}$.

For example, when a coating film contains a plurality of types of E1, $C_{E1}$ represents the total elemental concentration of these types of E1. The same applies to E2 and $C_{E2}$.

The composition ratio "$C_{Li}/(C_P + C_{E1} + C_{E2})$" obtained by XPS reflects the composition ratio of Li in the coating film (phosphorus compound), but is not equivalent to the composition ratio of Li in the coating film. This is because, in XPS, the composition of a core (positive electrode active material particle) can also be reflected. For example, when Li in the core is detected by XPS, the composition ratio of Li obtained by XPS may be larger than the actual composition ratio of Li in the coating film.

Coverage

The coverage is also measured by XPS. By analyzing the above measurement data, the ratio (elemental concentration) of each element is obtained from each peak area of C1s, O1s, P2p, M2p3, etc. The coverage is obtained by the following formula (3).

$$\theta = 100 \times (P + E1 + E2)/(P + E1 + E2 + M) \quad (3)$$

In the above formula (3), θ represents the coverage (%). P, E1, E2, and M represent the ratio of each element.

M in "M2p3" and the above formula (3) represents a constituent element of the positive electrode active material particle, and represents an element other than Li and O. That is, the positive electrode active material particle may be represented by the following formula (4).

$$LiMO_2 \qquad (4)$$

M may be composed of one element or may be composed of a plurality of elements. M may be, for example, at least one selected from the group consisting of nickel (Ni), cobalt (Co), manganese (Mn), and aluminum (Al). When M is composed of a plurality of elements, the sum of the composition ratios of the elements may be 1.

For example, when the positive electrode active material particle is "$LiNi_{1/3}Co_{1/3}Mn_{1/3}O_2$," the above formula (3) can be rewritten to the following formula (3').

$$\theta = (P + E1 + E2)/(P + E1 + E2 + Ni + Co + Mn) \times 100 \quad (3')$$

In the above formula (3'), Ni represents the elemental ratio of nickel obtained from the peak area of Ni2p3. Co represents the elemental ratio of cobalt obtained from the peak area of Co2p3. Mn represents the elemental ratio of manganese obtained from the peak area of Mn2p3.

Film Thickness Measurement

The film thickness (thickness of the coating film) can be measured by the following procedure. A sample is prepared by embedding composite particles in a resin material. For example, the cross section of the sample is revealed by an ion milling system. For example, an ion milling system "product name: ArBlade (registered trademark) 5000" made by Hitachi High-Tech Corporation (or an equivalent product) may be used. The cross section of the sample is observed by a scanning electron microscope (SEM). For example, an SEM "product name: SU8030" made by Hitachi High-Tech Corporation (or an equivalent product) may be used. For each of 10 composite particles, the film thickness is measured in 20 fields of view. The arithmetic mean of the film thicknesses at a total of 200 positions is regarded as the film thickness.

Inductively Coupled Plasma (ICP) Measurement

The molar ratio "$(n_{E1} + n_{E2})/n_p$" in a coating solution is measured by the following procedure. 100 ml of a sample solution is prepared by diluting 0.01 g of a coating solution with pure water. Aqueous solutions of P, E1, and E2 (1000 ppm, 10,000 ppm) are prepared. Standard solutions are prepared by diluting 0.01 g of each aqueous solution with pure water. An inductively coupled plasma-atomic emission spectroscopy (IPC-AES) instrument is prepared. The emission intensities of the standard solutions are measured by the ICP-AES instrument. Calibration curves are generated from the emission intensities of the standard solutions. The emission intensities of the sample solution (diluted coating solution) are measured by the ICP-AES instrument. The mass concentrations of P, E1, and E2 in the coating solution are obtained from the emission intensities of the sample solution and the calibration curves. The mass concentrations of P, E1, and E2 are then converted to their molar concentrations. The molar ratio is obtained by dividing the sum of the molar concentration of E1 ($n_{E1}$) and the molar concentration of E2 ($n_{E2}$) by the molar concentration of P ($n_P$).

Composite Particle

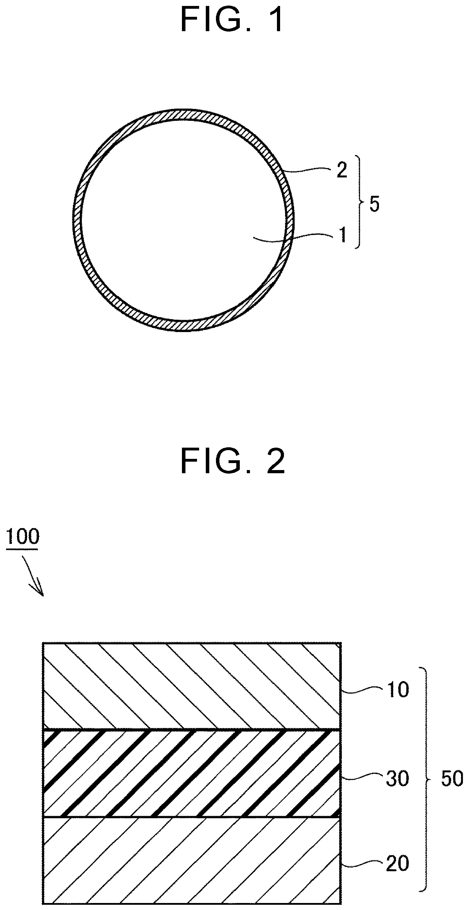

FIG. 1 is a conceptual diagram of a composite particle according to the embodiment. A composite particle 5 can be called, for example, "coated positive electrode active material." The composite particle 5 includes a positive electrode active material particle 1 and a coating film 2. The composite particle 5 may form, for example, an aggregate. That is, one composite particle 5 may include two or more positive electrode active material particles 1. The composite particle 5 may have a D50 of, for example, 1 μm to 50 μm, 1 μm to 20 μm, or 5 μm to 15 μm.

Coating Film

The coating film 2 is a shell of the composite particle 5. The coating film 2 covers at least a part of the surface of the positive electrode active material particle 1. The coating film 2 contains a phosphorus compound. The phosphorus compound contains either or both of E1 and E2, and P.

The phosphorus compound may further contain, for example, Li, O, carbon (C), etc. P may have a mass fraction of, for example, 1% to 10% in the composite particle 5.

The phosphorus compound may include, for example, a phosphate skeleton. That is, the phosphorus compound may be a phosphate compound. When the phosphorus compound includes a phosphate skeleton, fragments such as $PO_2^-$ and $PO_3^-$ can be detected by analyzing the composite particle 5 by time-of-flight secondary ion mass spectrometry (TOF-SIMS).

The composition ratio of Li at the particle surface, "$C_{Li}/(C_P + C_{E1} + C_{E2})$", is 2.5 or less (see the above formula (1)). Since the composition ratio of Li is 2.5 or less and either or both of E1 and E2 are present, the battery resistance can be significantly reduced. The composition ratio of Li may be, for example, 2.38 or less, 2.26 or less, 2.18 or less, 2.03 or less, 1.89 or less, 1.73 or less, 1.42 or less, or 1.1 or less. The composition ratio of Li may be zero. The composition ratio of Li may be, for example, 0.1 or more, 0.5 or more, or 1.05 or more. The composition ratio of Li may be, for example, 1.05 to 2.38.

E1 is a glass network-forming element. The mixed anion effect is expected to occur by adding E1. E1 may include, for example, at least one selected from the group consisting of B, Si, N, S, Ge, and H. E1 may include, for example, at least one selected from the group consisting of B and Si. E1 may form an oxide glass by itself. E1 may form a composite oxide glass together with P.

E2 is a transition element. E2 has a larger ionic radius than P. E2 can inhibit crystallization of the phosphorus compound. E2 may include, for example, at least one element selected from the group consisting of the first transition series elements (3d transition elements), the second transition series elements (4d transition elements), the third transition series elements (5d and 4f transition elements), and the fourth transition series elements. E2 may include, for example, at least one element selected from the group consisting of the second transition series elements and the third transition series elements. The third transition series elements include lanthanides. That is, E2 may include, for example, a lanthanide.

E2 may include, for example, at least one selected from the group consisting of La, Ce, praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), scandium (Sc), copper (Cu), Y, zirconium (Zr), molybdenum (Mo), technetium (Tc), ruthenium (Ru), rhodium (Rh), palladium (Pd), silver (Ag), hafnium (Hf), tantalum (Ta), tungsten (W), rhenium (Re), osmium (Os), iridium (Ir), platinum (Pt), and gold (Au).

E2 may include, for example, at least one selected from the group consisting of La, Ce, Zr, and Y. E2 may include, for example, at least one selected from the group consisting of La, Ce, and Y.

The chemical composition of the phosphorus compound may be represented by, for example, the following formula (5).

$$Li_w E^1{}_x E^2{}_y PO_z \qquad (5)$$

In the above formula (5), $E^1$ represents E1. $E^2$ represents E2. Moreover, w, x, y, and z are any numerals. For example, w, x, y, and z can be identified by analyzing the cross section of the composite particle 5 (coating film 2) by scanning transmission electron microscope-energy dispersive X-ray spectroscopy (STEM-EDX) etc. Cross-sectional samples are prepared according to the procedure described above in "Film Thickness Measurement."

The coverage may be, for example, 85% or more. As the coverage is 85% or more, the battery resistance is expected to be reduced. The coverage may be, for example, 88% or more, 89% or more, 90% or more, 94% or more, 95% or more, or 97% or more. The coverage may be, for example, 100%, or 99% or less. The coverage may be, for example, 85% to 97%, or 90% to 97%.

The coating film 2 may have, for example, a thickness of 5 nm to 100 nm, a thickness of 5 nm to 50 nm, a thickness of 10 nm to 30 nm, or a thickness of 20 to 30 nm.

Positive Electrode Active Material Particle

The positive electrode active material particle 1 is the core of the composite particle 5. The positive electrode active material particle 1 may be a secondary particle (aggregate of primary particles). The positive electrode active material particle 1 (secondary particle) may have a D50 of, for example, 1 μm to 50 μm, 1 μm to 20 μm, or 5 μm to 15 μm. Primary particles may have a maximum Feret diameter of, for example, 0.1 μm to 3 μm.

The positive electrode active material particle 1 can contain any desired component. The positive electrode active material particle 1 may contain, for example, at least one selected from the group consisting of $LiCoO_2$, $LiNiO_2$, $LiMnO_2$, $LiMn_2O_4$, $Li(NiCoMn)O_2$, $Li(NiCoAl)O_2$, and $LiFePO_4$. For example, "(NiCoMn)" in "$Li(NiCoMn)O_2$" indicates that the sum of the composition ratios of the elements in the parentheses is 1. The amounts of the individual elements in "(NiCoMn)" may be any desired values as long as the sum of their composition ratios is 1. $Li(NiCoMn)O_2$ may include, for example, $Li(Ni_{1/3}Co_{1/3}Mn_{1/3})O_2$, $Li(Ni_{0.5}Co_{0.2}Mn_{0.3})O_2$, and $Li(Ni_{0.8}Co_{0.1}Mn_{0.1})O_2$.

All-Solid-State Battery

FIG. 2 is a conceptual diagram of an all-solid-state battery according to the embodiment. An all-solid-state battery 100 may include, for example, an outer body (not shown). The outer body may be, for example, a pouch made of a metal foil laminated film. The outer body may contain a power generation element 50. The power generation element 50 includes a positive electrode 10, a separator layer 30, and a negative electrode 20. That is, the all-solid-state battery 100 includes the positive electrode 10, the separator layer 30, and the negative electrode 20.

Positive Electrode

The positive electrode 10 is in the form of a layer. The positive electrode 10 may include, for example, a positive electrode active material layer and a positive electrode current collector. For example, the positive electrode active material layer may be formed by coating the surface of the positive electrode current collector with a positive electrode mixture. The positive electrode current collector may include, for example, Al foil etc. The positive electrode current collector may have a thickness of, for example, 5 $\mu$m to 50 $\mu$m.

The positive electrode active material layer may have a thickness of, for example, 10 $\mu$m to 200 $\mu$m. The positive electrode active material layer is in close contact with the separator layer 30. The positive electrode active material layer contains the positive electrode mixture. The positive electrode mixture contains composite particles and a sulfide solid electrolyte. That is, the positive electrode 10 contains composite particles and a sulfide solid electrolyte. The composite particles are as described in detail above.

The sulfide solid electrolyte can form ionic conduction paths in the positive electrode active material layer. For example, one part by volume to 200 parts by volume, 50 parts by volume to 150 parts by volume, or 50 parts by volume to 100 part by volume of the sulfide solid electrolyte may be added per 100 parts by volume of the composite particles (positive electrode active material). The sulfide solid electrolyte contains S. The sulfide solid electrolyte may contain, for example, Li, P, and S. The sulfide solid electrolyte may further contain, for example, O, Si, etc. The sulfide solid electrolyte may further contain, for example, a halogen etc. The sulfide solid electrolyte may further contain, for example, iodine (I), bromine (Br), etc. The sulfide solid electrolyte may be, for example, a glass-ceramic type sulfide solid electrolyte or an argyrodite type sulfide solid electrolyte. The sulfide solid electrolyte may contain, for example, at least one selected from the group consisting of LiI-LiBr-$Li_3PS_4$, $Li_2S$-$SiS_2$, LiI-$Li_2S$-$SiS_2$, LiI-$Li_2S$-$P_2S_5$, LiI-$Li_2O$-$Li_2S$-$P_2S_5$, LiI-$Li_2S$-$P_2O_5$, LiI-$Li_3PO_4$-$P_2S_5$, $Li_2S$-$P_2S_5$, and $Li_3PS_4$.

For example, "LiI-LiBr-$Li_3PS_4$" represents a sulfide solid electrolyte formed by mixing LiI, LiBr, and $Li_3PS_4$ in any desired molar ratio. For example, the sulfide solid electrolyte may be produced by a mechanochemical method. "$Li_2S$-$P_2S_5$" includes $Li_3PS_4$. $Li_3PS_4$ can be produced by, for example, mixing $Li_2S$ and $P_2S_5$ in "$Li_2S$ : $P_2S_5$ = 75 : 25 (molar ratio)"

The positive electrode active material layer may further contain, for example, an electrically conductive material. The electrically conductive material can form electronic conduction paths in the positive electrode active material layer. For example, 0.1 parts by mass to 10 parts by mass of the electrically conductive material may be added per 100 parts by mass of the composite particles (positive electrode active material). The electrically conductive material can contain any desired component. The electrically conductive material may contain, for example, at least one selected from the group consisting of carbon black, vapor-grown carbon fibers (VGCFs), carbon nanotubes (CNTs), and graphene flakes.

The positive electrode active material layer may further contain, for example, a binder. For example, 0.1 parts by mass to 10 parts by mass of the binder may be added per 100 parts by mass of the composite particles (positive electrode active material). The binder can contain any desired component. The binder may contain, for example, at least one selected from a group consisting of polyvinylidene difluoride (PVDF), a polyvinylidene difluoride-hexafluoropropylene copolymer (PVDF-HFP), styrene butadiene rubber (SBR), and polytetrafluoroethylene (PTFE).

Negative Electrode

The negative electrode 20 is in the form of a layer. The negative electrode 20 may include, for example, a negative electrode active material layer and a negative electrode current collector. For example, the negative electrode active material layer may be formed by coating the surface of the negative electrode current collector with a negative electrode mixture. The negative electrode current collector may include, for example, Cu foil, Ni foil, etc. The negative electrode current collector may have a thickness of, for example, 5 $\mu$m to 50 $\mu$m.

The negative electrode active material layer may have a thickness of, for example, 10 $\mu$m to 200 $\mu$m. The negative electrode active material layer is in close contact with the separator layer 30. The negative electrode active material layer contains the negative electrode mixture. The negative electrode mixture contains negative electrode active material particles and a sulfide solid electrolyte. The negative electrode mixture may further contain an electrically conductive material and a binder. The sulfide solid electrolyte may be the same or different between the negative electrode mixture and the positive electrode mixture. The negative electrode active material particles can contain any desired component. The negative electrode active material particles may contain, for example, at least one selected from the group consisting of graphite, Si, $SiO_x$ ($0 < x < 2$), and $Li_4Ti_5O_{12}$.

Separator Layer

The separator layer 30 is interposed between the positive electrode 10 and the negative electrode 20. The separator layer 30 separates the positive electrode 10 from the negative electrode 20. The separator layer 30 contains a sulfide solid electrolyte. The separator layer 30 may further contain a binder. The sulfide solid electrolyte may be the same or different between the separator layer 30 and the positive electrode mixture. The sulfide solid electrolyte may be the same or different between the separator layer 30 and the negative electrode mixture.

Method for Producing a Composite Particle

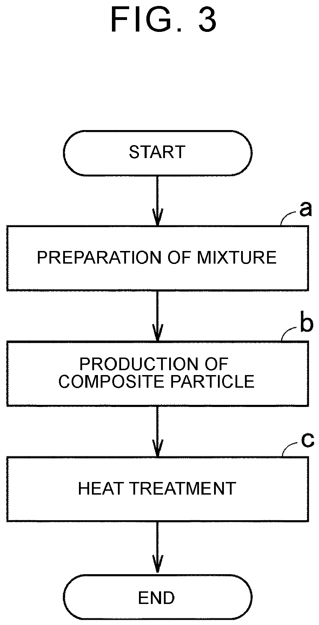

FIG. 3 is a schematic flowchart of a method for producing a composite particle according to the embodiment. Hereinafter, the "method for producing a composite particle according to the embodiment" is sometimes simply referred to as the "production method." The production method includes "(a) preparation of mixture" and "(b) production of composite particle." The production method may further include, for example, "(c) heat treatment" etc.

(a) Preparation of Mixture

The production method includes preparing a mixture by mixing a coating solution and positive electrode active material particles. The positive electrode active material particles are as described in detail above. The mixture may be, for example, a suspension or wet powder. The suspension may be formed by, for example, dispersing the positive electrode active material particles (powder) in the coating solution. The wet powder may be formed by spraying the coating solution into the powder. Any mixer, granulator, etc. can be used in the production method.

The coating solution contains a solute and a solvent. The solute contains a raw material for the coating film. The coating solution may further contain, for example, a suspended solid (insoluble component), a precipitate, etc.

The amount of solute may be, for example, 0.1 parts by mass to 20 parts by mass, one part by mass to 15 parts by mass, or 5 parts by mass to 10 parts by mass per 100 parts by mass of the solvent. The solvent can contain any desired component as long as the solute is dissolved in the solvent. The solvent may contain, for example, water, an alcohol, etc. The solvent may contain, for example, deionized water etc.

The solute contains either or both of E1 and E2, and P. E1 and E2 are as described in detail above. The solute may contain, for example, at least one selected from the group consisting of oxoacids of E1 and oxides of E1. The solute may contain, for example, at least one selected from the group consisting of boric acid, silicic acid, nitric acid, sulfuric acid, and germanic acid. The solute may contain, for example, orthoboric acid, metaboric acid, etc.

The solute may contain, for example, an oxide of E2. The solute may contain, for example, at least one selected from the group consisting of lanthanum oxide, cerium oxide, and yttrium oxide.

The solute may contain, for example, a phosphate compound. The solute may contain, for example, at least one selected from the group consisting of phosphoric anhydride ($P_2O_5$), orthophosphoric acid, pyrophosphoric acid, metaphosphoric acid (($HPO_3)_n$), and polyphosphoric acid. The solute may contain, for example, at least one selected from the group consisting of metaphosphoric acid and polyphosphoric acid. Metaphosphoric acid and polyphosphoric acid can have longer molecular chains than other phosphate compounds. The phosphate compound having long molecular chains is considered to facilitate formation of a continuous coating film. As the coating film is continuous, the coverage, for example, is expected to be increased.

The molar ratio of the sum of E1 and E2 to P, "$(n_{E1} + n_{E2})/n_P$," may be, for example, more than 0.040 and 1.51 or less (see the above formula (2)). The battery resistance is thus expected to be reduced. The molar ratio may be, for example, 1.03 or less, 0.67 or less, 0.48 or less, 0.098 or less, or 0.051 or less. The molar ratio may be, for example, 0.048 or more, or 0.10 or more. The molar ratio may be, for example, 0.048 to 1.03.

The solute may further contain, for example, a lithium compound. The solute may contain, for example, lithium hydroxide, lithium carbonate, or lithium nitrate.

The molar ratio of Li to the sum of P, E1, and E2, "$n_{Li}/(n_P + n_{E1} + n_{E2})$," may be, for example, less than 1.1, 1.0 or less, 0.45 or less, 0.1 or less, or 0.05 or less. The molar ratio "$n_{Li}/(n_P + n_{E1} + n_{E2})$" may be, for example, zero. In "$n_{Li}/(n_P + n_{E1} + n_{E2})$," $n_{Li}$ may be less than the detection limit in ICP measurement. The lower the molar ratio "$n_{Li}/(n_P + n_{E1} + n_{E2})$," the lower the composition ratio of Li at the particle surface is expected to be.

(b) Production of Composite Particle

The production method includes producing a composite particle by drying the mixture. The coating solution on the surfaces of the positive electrode active material particles dries to form a coating film. Any drying method can be used in the production method.

Composite particles may be formed by, for example, a spray-drying method. That is, droplets are formed by spraying the suspension through a nozzle. The droplets contain the positive electrode active material particles and the coating solution. For example, composite particles can be formed by drying the droplets with hot air. The coverage, for example, is expected to be increased by using the spray-drying method.

The solids content of the suspension for spray drying may be, for example, 1 vol% to 50 vol%, or 10 vol% to 30 vol%. The nozzle diameter may be, for example, 0.1 mm to 10 mm or 0.1 mm to 1 mm. The hot air temperature may be, for example, 100°C to 200°C.

For example, composite particles may be produced by a tumbling fluidized bed coater. In the tumbling fluidized bed coater, "(a) preparation of mixture" and "(b) production of composite particle" can be performed simultaneously.

(c) Heat Treatment

The production method may include heat treating the composite particle. The coating film can be fixed by heat treatment. Heat treatment can also be called "baking." Any heat treatment equipment can be used in the production method. The heat treatment temperature may be, for example, 150°C to 300°C. The heat treatment time may be, for example, one hour to 10 hours. For example, heat treatment may be performed in air or in an inert atmosphere.

Production of All-Solid-State Battery

Composite particles, positive electrodes, and all-solid-state batteries of Nos. 1 to 19 were produced as follows. Hereinafter, for example, the "composite particles of No. 1" are sometimes simply referred to as "No. 1."

No. 1

870.4 parts by mass of a hydrogen peroxide solution (mass concentration: 30%) was poured into a container. Next, 987.4 parts by mass of a deionized water and 44.2 parts by mass of niobic acid ($Nb_2O_5 \cdot 3H_2O$) were added into the container. 87.9 parts by mass of ammonia water (mass concentration: 28%) was then added into the container. The contents of the container were thoroughly stirred to produce a solution. The solution is considered to contain a peroxo complex of Nb. A coating solution was prepared by dissolving 0.1 parts by mass of lithium hydroxide monohydrate ($LiOH \cdot H_2O$) in the solution.

$Li(Ni_{1/3}Co_{1/3}Mn_{1/3})O_2$ was prepared as positive electrode active material particles. A suspension was prepared by dispersing 50 parts by mass of powder of the positive electrode active material particles in 53.7 parts by mass of the coating solution. A spray dryer "product name: Mini Spray Dryer B-290" made by BUCHI Corporation was prepared. The suspension was fed into the spray dryer to produce powder of composite particles. The drying air temperature in the spray dryer was 200°C, and the drying air flow rate in the spray dryer was 0.45 m³/min. The composite particles were heat treated in air. The heat treatment temperature was 200°C. The heat treatment time was five hours. A coating film of No. 1 is considered to contain $LiNbO_3$. The coverage was measured by the procedure described above. The measurement results are shown in Table 1 below.

The following materials were prepared.

Sulfide solid electrolyte: $10LiI\text{-}15LiBr\text{-}75Li_3PS_4$
Electrically conductive material: VGCFs
Binder: SBR
Dispersion medium: heptane
Positive electrode current collector: Al foil

Positive electrode slurry was prepared by mixing the composite particles, the sulfide solid electrolyte, the electrically conductive material, the binder, and the dispersion medium. The mixing ratio of the composite particles to the solid sulfide electrolyte was "composite particles : sulfide solid electrolyte = 6 : 4 (volume ratio)." 3 parts by mass of the electrically conductive material was added per 100 parts by mass of the composite particles. 3 parts by mass of the binder was added per 100 parts by mass of the composite particles. The positive electrode slurry was thoroughly stirred by an ultrasonic homogenizer. A coating was formed by coating the surface of the positive electrode current collector with the positive electrode slurry. The coating was dried on a hot plate at 100°C for 30 minutes. A positive electrode web was thus produced. A disk-shaped positive electrode was cut out from the positive electrode web. The area of the positive electrode was 1 cm$^2$.

A negative electrode and a separator layer were prepared. Negative electrode active material particles were graphite. The same sulfide solid electrolyte was used for the positive electrode, the separator layer, and the negative electrode. The positive electrode, the separator layer, and the negative electrode were stacked in a cylindrical jig. The stack thus formed was pressed to form a power generation element. An all-solid-state battery was formed by connecting terminals to the power generation element.

No. 2

10.8 parts by mass of orthophosphoric acid (85%, made by KISHIDA CHEMICAL CO., LTD.) was dissolved in 166 parts by mass of deionized water to produce a solution. A coating solution was prepared by dissolving lithium nitrate in the solution so that the molar ratio "$n_{Li}/(n_P + n_{E1} + n_{E2})$" was 3.00. Thereafter, composite particles were produced in a manner similar to that of No. 1. A coating film of No. 2 is considered to contain $Li_3PO_4$. The composition ratio of Li at the particle surface, "$C_{Li}/(C_P + C_{E1} + C_{E2})$," and the coverage were measured by the procedure described above. The measurement results are shown in Table 1 below. A positive electrode and an all-solid-state battery were also produced in a manner similar to that of No. 1.

No. 3

10.8 parts by mass of orthophosphoric acid (85%, made by KISHIDA CHEMICAL CO., LTD.) was dissolved in 166 parts by mass of deionized water to produce a solution. A coating solution was prepared by dissolving lithium hydroxide monohydrate in the solution so that the molar ratio "$n_{Li}/(n_P + n_{E1} + n_{E2})$" was 0.45.
Thereafter, composite particles, a positive electrode, and an all-solid-state battery were produced in a manner similar to that of No. 1. A coating film of No. 3 is considered to contain, for example, $Li_xPO_y$ (x and y are any numerals).

No. 4

10.8 parts by mass of metaphosphoric acid (made by FUJIFILM Wako Pure Chemical Corporation) was dissolved in 166 parts by mass of deionized water to produce a solution. A coating solution was prepared by dissolving lithium hydroxide monohydrate in the solution so that the molar ratio "$n_{Li}/(n_P + n_{E1} + n_{E2})$" was 0.45.
Thereafter, composite particles, a positive electrode, and an all-solid-state battery were produced in a manner similar to that of No. 1. A coating film of No. 4 is considered to contain, for example, $Li_xPO_y$ (x and y are any numerals).

No. 5

A coating solution was prepared by dissolving 10.8 parts by mass of metaphosphoric acid (made by FUJIFILM Wako Pure Chemical Corporation) in 166 parts by mass of deionized water. Thereafter, composite particles, a positive electrode, and an all-solid-state battery were produced in a manner similar to that of No. 1. The coating solution of No. 5 is different from the coating solution of No. 4 in that lithium hydroxide monohydrate was not added. A coating film of No. 5 is considered to contain, for example, $PO_x$ (x is any numeral).

No. 6

10.8 parts by mass of metaphosphoric acid (made by FUJIFILM Wako Pure Chemical Corporation) was dissolved in 166 parts by mass of deionized water to produce a solution. A coating solution was prepared by dissolving boric acid (made by NACALAI TESQUE, INC.) in the solution so that the molar ratio "$(n_{E1} + n_{E2})/n_P$" was 1.0. The molar ratio "$(n_{E1} + n_{E2})/n_p$" in the coating solution was measured by the procedure described above. The measurement results are shown in Table 1 below.
Thereafter, composite particles, a positive electrode, and an all-solid-state battery were produced in a manner similar to that of No. 1. A coating film of No. 6 is considered to contain, for example, $B_xPO_y$ (x and y are any numerals).

No. 7

10.8 parts by mass of metaphosphoric acid (made by FUJIFILM Wako Pure Chemical Corporation) was dissolved in 166 parts by mass of deionized water to produce a solution. A coating solution was prepared by dissolving boric acid (made by NACALAI TESQUE, INC.) in the solution so that the molar ratio "$(n_{E1} + n_{E2})/n_P$" was 0.5. The molar ratio "$(n_{E1} + n_{E2})/n_p$" in the coating solution was measured by the procedure described above. The measurement results are shown in Table 1 below.

Thereafter, composite particles, a positive electrode, and an all-solid-state battery were produced in a manner similar to that of No. 1. A coating film of No. 7 is considered to contain, for example, $B_xPO_y$ (x and y are any numerals).

No. 8

10.8 parts by mass of metaphosphoric acid (made by FUJIFILM Wako Pure Chemical Corporation) was dissolved in 166 parts by mass of deionized water to produce a solution. A coating solution was prepared by dissolving boric acid (made by NACALAI TESQUE, INC.) in the solution so that the molar ratio "$(n_{E1} + n_{E2})/n_p$" was 0.67. The molar ratio "$(n_{E1} + n_{E2})/n_p$" in the coating solution was measured by the procedure described above. The measurement results are shown in Table 1 below.

Thereafter, composite particles, a positive electrode, and an all-solid-state battery were produced in a manner similar to that of No. 1. A coating film of No. 8 is considered to contain, for example, $B_xPO_y$ (x and y are any numerals).

No. 9

10.8 parts by mass of metaphosphoric acid (made by FUJIFILM Wako Pure Chemical Corporation) was dissolved in 166 parts by mass of deionized water to produce a solution. A coating solution was prepared by dissolving boric acid (made by NACALAI TESQUE, INC.) in the solution so that the molar ratio "$(n_{E1} + n_{E2})/n_p$" was 1.50. The molar ratio "$(n_{E1} + n_{E2})/n_p$" in the coating solution was measured by the procedure described above. The measurement results are shown in Table 1 below.

Thereafter, composite particles, a positive electrode, and an all-solid-state battery were produced in a manner similar to that of No. 1. A coating film of No. 9 is considered to contain, for example, $B_xPO_y$ (x and y are any numerals).

No. 10

10.8 parts by mass of metaphosphoric acid (made by FUJIFILM Wako Pure Chemical Corporation) was dissolved in 166 parts by mass of deionized water to produce a solution. A coating solution was prepared by dissolving lanthanum oxide (made by FUJIFILM Wako Pure Chemical Corporation) in the solution so that the molar ratio "$(n_{E1} + n_{E2})/n_p$" was 0.05. The molar ratio "$(n_{E1} + n_{E2})/n_p$" in the coating solution was measured by the procedure described above. The measurement results are shown in Table 1 below. Thereafter, composite particles, a positive electrode, and an all-solid-state battery were produced in a manner similar to that of No. 1. A coating film of No. 10 is considered to contain, for example, $La_xPO_y$ (x and y are any numerals).

No. 11

10.8 parts by mass of metaphosphoric acid (made by FUJIFILM Wako Pure Chemical Corporation) was dissolved in 166 parts by mass of deionized water to produce a solution. A coating solution was prepared by dissolving lanthanum oxide (made by FUJIFILM Wako Pure Chemical Corporation) in the solution so that the molar ratio "$(n_{E1} + n_{E2})/n_p$" was 0.1. The molar ratio "$(n_{E1} + n_{E2})/n_p$" in the coating solution was measured by the procedure described above. The measurement results are shown in Table 1 below. Thereafter, composite particles, a positive electrode, and an all-solid-state battery were produced in a manner similar to that of No. 1. A coating film of No. 11 is considered to contain, for example, $La_xPO_y$ (x and y are any numerals).

No. 12

10.8 parts by mass of metaphosphoric acid (made by FUJIFILM Wako Pure Chemical Corporation) was dissolved in 166 parts by mass of deionized water to produce a solution. Cerium oxide (made by FUJIFILM Wako Pure Chemical Corporation) was dissolved in the solution so that the molar ratio "$(n_{E1} + n_{E2})/n_p$" was 0.05. Cerium oxide did not entirely dissolved, and a small amount of precipitate was formed. A coating solution was thus prepared. The molar ratio "$(n_{E1} + n_{E2})/n_p$" in the coating solution was measured by the procedure described above. The measurement results are shown in Table 1 below. Thereafter, composite particles, a positive electrode, and an all-solid-state battery were produced in a manner similar to that of No. 1. A coating film of No. 12 is considered to contain, for example, $Ce_xPO_y$ (x and y are any numerals).

No. 13

10.8 parts by mass of metaphosphoric acid (made by FUJIFILM Wako Pure Chemical Corporation) was dissolved in 166 parts by mass of deionized water to produce a solution. A coating solution was prepared by dissolving yttrium oxide (made by FUJIFILM Wako Pure Chemical Corporation) in the solution so that the molar ratio "$(n_{E1} + n_{E2})/n_P$" was 0.05. The molar ratio "$(n_{E1} + n_{E2})/n_p$" in the coating solution was measured by the procedure described above. The measurement results are shown in Table 1 below.

Thereafter, composite particles, a positive electrode, and an all-solid-state battery were produced in a manner similar to that of No. 1. A coating film of No. 13 is considered to contain, for example, $Y_xPO_y$ (x and y are any numerals). Y was not considered in calculation of the coverage because the detected amount of Y in XPS measurement was small enough to be negligible.

No. 14

10.8 parts by mass of metaphosphoric acid (made by FUJIFILM Wako Pure Chemical Corporation) was dissolved in 166 parts by mass of deionized water to produce a solution. Boric acid (made by NACALAI TESQUE, INC.) was dissolved in the solution so that the molar ratio "$n_{E1}/n_P$" was 1.0. A coating solution was prepared by further dissolving lanthanum oxide (made by FUJIFILM Wako Pure Chemical Corporation) in the solution so that the molar ratio "$n_{E2}/n_P$" was 0.05. The molar ratio "$(n_{E1} + n_{E2})/n_p$" in the coating solution was measured by the procedure described above. The measurement results are shown in Table 1 below.

Thereafter, composite particles, a positive electrode, and an all-solid-state battery were produced in a manner similar to that of No. 1. A coating film of No. 14 is considered to contain, for example, $La_xB_yPO_z$ (x, y, and z are any numerals).

No. 15

10.8 parts by mass of metaphosphoric acid (made by FUJIFILM Wako Pure Chemical Corporation) was dissolved in 166 parts by mass of deionized water to produce a solution. Lithium hydroxide monohydrate was dissolved in the solution so that the molar ratio "$n_{Li}/(n_P + n_{E1} + n_{E2})$" was 0.45. A coating solution was prepared by further dissolving boric acid (made by NACALAI TESQUE, INC.) in the solution so that the molar ratio "$(n_{E1} + n_{E2})/n_P$" was 1.0.

Thereafter, composite particles, a positive electrode, and an all-solid-state battery were produced in a manner similar to that of No. 1. A coating film of No. 15 is considered to contain, for example, $Li_xB_yPO_z$ (x, y, and z are any numerals).

No. 16

10.8 parts by mass of metaphosphoric acid (made by FUJIFILM Wako Pure Chemical Corporation) was dissolved in 166 parts by mass of deionized water to produce a solution. Lithium hydroxide monohydrate was dissolved in the solution so that the molar ratio "$n_{Li}/(n_P + n_{E1} + n_{E2})$" was 0.45. A coating solution was prepared by further dissolving lanthanum oxide (made by FUJIFILM Wako Pure Chemical Corporation) in the solution so that the molar ratio "$(n_{E1} + n_{E2})/n_P$" was 0.05.

Thereafter, composite particles, a positive electrode, and an all-solid-state battery were produced in a manner similar to that of No. 1. A coating film of No. 16 is considered to contain, for example, $Li_xLa_yPO_z$ (x, y, and z are any numerals).

No. 17

10.8 parts by mass of metaphosphoric acid (made by FUJIFILM Wako Pure Chemical Corporation) was dissolved in 166 parts by mass of deionized water to produce a solution. Lithium hydroxide monohydrate was dissolved in the solution so that the molar ratio "$n_{Li}/(n_P + n_{E1} + n_{E2})$" was 0.45. A coating solution was prepared by further dissolving cerium oxide (made by FUJIFILM Wako Pure Chemical Corporation) in the solution so that the molar ratio "$(n_{E1} + n_{E2})/n_P$" was 0.05.

Thereafter, composite particles, a positive electrode, and an all-solid-state battery were produced in a manner similar to that of No. 1. A coating film of No. 17 is considered to contain, for example, $Li_xCe_yPO_z$ (x, y, and z are any numerals).

No. 18

10.8 parts by mass of metaphosphoric acid (made by FUJIFILM Wako Pure Chemical Corporation) was dissolved in 166 parts by mass of deionized water to produce a solution. Lithium hydroxide monohydrate was dissolved in the solution so that the molar ratio "$n_{Li}/(n_P + n_{E1} + n_{E2})$" was 0.45. A coating solution was prepared by further dissolving yttrium oxide (made by FUJIFILM Wako Pure Chemical Corporation) in the solution so that the molar ratio "$(n_{E1} + n_{E2})/n_P$" was 0.05.

Thereafter, composite particles, a positive electrode, and an all-solid-state battery were produced in a manner similar to that of No. 1. A coating film of No. 18 is considered to contain, for example, $Li_xY_yPO_z$ (x, y, and z are any numerals).

Y was not considered in calculation of the coverage because the detected amount of Y in XPS measurement was small enough to be negligible.

No. 19

10.8 parts by mass of metaphosphoric acid (made by FUJIFILM Wako Pure Chemical Corporation) was dissolved in 166 parts by mass of deionized water to produce a solution. Lithium hydroxide monohydrate was dissolved in the solution so that the molar ratio "$n_{Li}/(n_P + n_{E1} + n_{E2})$" was 0.45. Boric acid (made by NACALAI TESQUE, INC.) was dissolved in the solution so that the molar ratio "$n_{E1}/n_P$" was 1.0. A coating solution was prepared by further dissolving lanthanum oxide (made by FUJIFILM Wako Pure Chemical Corporation) in the solution so that the molar ratio "$n_{E2}/n_P$" was 0.05.

Thereafter, composite particles, a positive electrode, and an all-solid-state battery were produced in a manner similar to that of No. 1. A coating film of No. 19 is considered to contain, for example, $Li_wLa_xB_yPO_z$ (w, x, y, and z are any numerals).

Evaluation

The battery resistance was measured. The measurement results are shown in Table 1 below. The battery resistances in Table 1 are relative values. The battery resistance of No. 1 ($LiNbO_3$) is defined as 1.0. When the battery resistance is 1.2 or less, the coating film is regarded as having resistance as low as or lower than that of LiNbOs.

Table 1

| No. | Production Method | | | | | Composite Particles | | | Evaluation |
|---|---|---|---|---|---|---|---|---|---|
| | Coating Solution | | | | | Coating Film | | | Battery Resistance (-) |
| | Solute | | | | ICP | Constituent Elements | XPS | | |
| | P Source | E1 Source | E2 Source | Others | Molar Ratio $(n_{E1}+n_{E2})/n_P$ (-) | | Li Composition Ratio $C_{Li}/(C_P+C_{E1}+C_{E2})$ (-) | Coverage (%) | |
| 1 | - | - | - | $Nb_2O_5$, LiOH | - | Li, Nb, O | - | 95 | 1.0 |
| 2 | $H_3PO_4$ | - | - | $LiNO_3$ | 0 | Li, P, O | 3.92 | 80 | 21 |
| 3 | $H_3PO_4$ | | | LiOH | 0 | Li, P, O | 2.58 | 80 | 12 |
| 4 | $(HPO_3)_n$ | - | - | LiOH | 0 | Li, P, O | 1.42 | 88 | 1.5 |
| 5 | $(HPO_3)n$ | - | - | - | 0 | P, O | 1.73 | 83 | 1.4 |
| 6 | $(HPO_3)n$ | $H_3BO_3$ | - | - | 1.01 | B, P, O | 1.1 | 95 | 1.0 |
| 7 | $(HPO_3)_n$ | $H_3BO_3$ | - | - | 0.48 | B, P, O | 1.25 | 97 | 1.1 |
| 8 | $(HPO_3)_n$ | $H_3BO_3$ | | | 0.67 | B, P, O | 1.21 | 94 | 1.1 |
| 9 | $(HPO_3)_n$ | $H_3BO_3$ | | | 1.51 | B, P, O | 1.18 | 96 | 1.0 |
| 10 | $(HPO_3)_n$ | - | $La_2O_3$ | - | 0.058 | La, P, O | 1.85 | 89 | 1.0 |
| 11 | $(HPO_3)_n$ | - | $La_2O_3$ | - | 0.098 | La, P, O | 2.03 | 88 | 1.0 |
| 12 | $(HPO_3)_n$ | - | $CeO_2$ | - | 0.051 | Ce, P, O | 2.18 | 89 | 1.2 |
| 13 | $(HPO_3)_n$ | - | $Y_2O_3$ | - | 0.048 | Y, P, O | 2.26 | 88 | 1.2 |
| 14 | $(HPO_3)n$ | $H_3BO_3$ | $La_2O_3$ | - | 1.03 | La, B, P, O | 1.05 | 94 | 0.9 |
| 15 | $(HPO_3)_n$ | $H_3BO_3$ | - | LiOH | 1 | Li, B, P, O | 2.38 | 90 | 1.0 |
| 16 | $(HPO_3)_n$ | - | $La_2O_3$ | LiOH | 0.049 | Li, La, P, O | 1.89 | 85 | 1.0 |
| 17 | $(HPO_3)n$ | - | CeOz | LiOH | 0.050 | Li, Ce, P, O | 2.15 | 88 | 1.1 |
| 18 | $(HPO_3)n$ | - | $Y_2O_3$ | LiOH | 0.049 | Li, Y, P, O | 2.13 | 88 | 1.1 |
| 19 | $(HPO_3)_n$ | $H_3BO_3$ | $La_2O_3$ | LiOH | 1.01 | Li, La, B, P, O | 1.39 | 90 | 0.9 |

Results

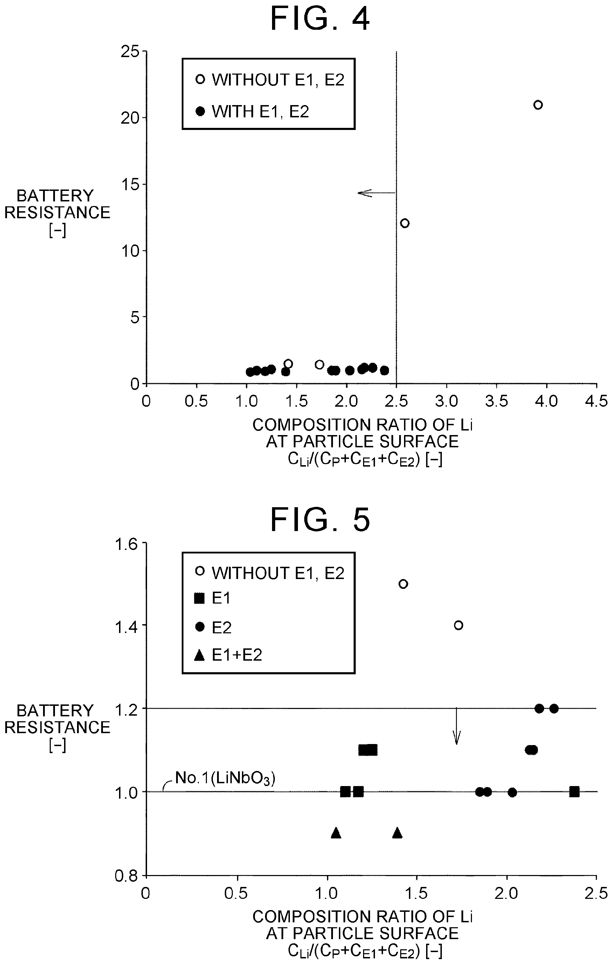

FIG. 4 is a first graph showing the relationship between the composition ratio of Li at the particle surface and the battery resistance. The battery resistance is significantly reduced in the region where the composition ratio of Li at the particle surface is 2.5 or less.

FIG. 5 is a second graph showing the relationship between the composition ratio of Li at the particle surface and the battery resistance. In the region where the composition ratio of Li at the particle surface is 2.5 or less, the battery resistance is further reduced when the coating film contains either or both of E1 and E2. The battery resistance of 1.2 or less is achieved when the coating film contains E1 or E2.

The battery resistance of less than 1.0 is achieved when the coating film contains both E1 and E2.

The embodiment and the examples are illustrative in all respects. The embodiment and the examples are not restrictive. The technical scope of the present disclosure includes all modifications that fall within the meaning and scope equivalent to the claims. For example, it is planned from the beginning to extract desired configurations from the embodiment and the examples and combine the extracted configurations as desired.

**Claims**

1. A composite particle (5), comprising:

   a positive electrode active material particle (1); and
   a coating film (2), wherein:

      the coating film (2) covers at least a part of a surface of the positive electrode active material particle (1),
      the coating film (2) includes a phosphorus compound,
      the phosphorus compound includes either or both of a first element and a second element, and phosphorus,
      the first element is a glass network-forming element,
      the second element is a transition element, and
      a relationship given by the following formula (1) is satisfied,

$$C_{Li}/(C_P + C_{E1} + C_{E2}) \leq 2.5 \quad (1)$$

      where $C_{Li}$, $C_P$, $C_{E1}$, and $C_{E2}$ represent elemental concentrations obtained by measuring the composite particle (5) by X-ray photoelectron spectroscopy,
      $C_{Li}$ represents an elemental concentration of lithium,
      $C_P$ represents an elemental concentration of phosphorus,
      $C_{E1}$ represents an elemental concentration of the first element, and
      $C_{E2}$ represents an elemental concentration of the second element.

2. The composite particle (5) according to claim 1, wherein the first element includes at least one selected from a group consisting of boron, silicon, nitrogen, sulfur, germanium, and hydrogen.

3. The composite particle (5) according to claim 2, wherein the first element includes at least one selected from a group consisting of boron and silicon.

4. The composite particle (5) according to any one of claims 1 to 3, wherein the second element includes at least one element selected from a group consisting of second transition series elements and third transition series elements.

5. The composite particle (5) according to claim 4, wherein the second element includes at least one selected from a group consisting of lanthanum, cerium, and yttrium.

6. The composite particle (5) according to any one of claims 1 to 5, wherein a coverage obtained from a result of measuring the composite particle (5) by the X-ray photoelectron spectroscopy is 85% or more, the coverage indicating a percentage of the surface of the positive electrode active material particle (1) covered by the coating film (2).

7. A positive electrode (10), comprising:

the composite particle (5) according to any one of claims 1 to 6; and
a sulfide solid electrolyte.

8. An all-solid-state battery (100) comprising the positive electrode (10) according to claim 7.

9. A method for producing a composite particle (5), the method comprising:

(a) preparing a mixture by mixing a coating solution and a positive electrode active material particle; and
(b) producing the composite particle by drying the mixture, wherein:

the coating solution includes a solute and a solvent,
the solute includes either or both of a first element and a second element, and phosphorus,
the first element is a glass network-forming element, and
the second element is a transition element.

10. The method according to claim 9, wherein the solute includes a phosphate compound.

11. The method according to claim 9 or 10, wherein the first element includes at least one selected from a group consisting of boron, silicon, nitrogen, sulfur, germanium, and hydrogen.

12. The method according to claim 11, wherein the first element includes at least one selected from a group consisting of boron and silicon.

13. The method according to any one of claims 9 to 12, wherein the second element includes at least one element selected from a group consisting of second transition series elements and third transition series elements.

14. The method according to claim 13, wherein the second element includes at least one selected from a group consisting of lanthanum, cerium, and yttrium.

15. The method according to any one of claims 9 to 14, wherein the coating solution satisfies a relationship given by the following formula (2),

$$0.040 < (n_{E1} + n_{E2})/n_P \leq 1.51 \quad (2)$$

where $n_P$ represents a molar concentration of phosphorus in the coating solution,
$n_{E1}$ represents a molar concentration of the first element in the coating solution, and
$n_{E2}$ represents a molar concentration of the second element in the coating solution.

# FIG. 1

# FIG. 2

# FIG. 3

```
        ┌─────────────┐
        │    START    │
        └──────┬──────┘
               │
               ▼                    a
        ┌─────────────────────────┐
        │ PREPARATION OF MIXTURE  │
        └─────────────────────────┘
               │
               ▼                    b
        ┌─────────────────────────┐
        │     PRODUCTION OF       │
        │   COMPOSITE PARTICLE    │
        └─────────────────────────┘
               │
               ▼                    c
        ┌─────────────────────────┐
        │     HEAT TREATMENT      │
        └─────────────────────────┘
               │
               ▼
        ┌─────────────┐
        │     END     │
        └─────────────┘
```

# FIG. 4

BATTERY
RESISTANCE
[-]

○ WITHOUT E1, E2
● WITH E1, E2

COMPOSITION RATIO OF Li
AT PARTICLE SURFACE
$C_{Li}/(C_P+C_{E1}+C_{E2})$ [-]

# FIG. 5

BATTERY
RESISTANCE
[-]

○ WITHOUT E1, E2
■ E1
● E2
▲ E1+E2

No.1(LiNbO₃)

COMPOSITION RATIO OF Li
AT PARTICLE SURFACE
$C_{Li}/(C_P+C_{E1}+C_{E2})$ [-]

**EP 4 246 617 A1**

EP 23 15 5304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/005888 A1 (SUGIURA RYUTA [JP] ET AL) 7 January 2021 (2021-01-07) * paragraph [0007] – paragraph [0055] * ----- | 1-10, 13-15 | INV. H01M4/1391 C01G53/00 H01M4/36 |
| X | RIBEIRO J F ET AL: "A chemically stable PVD multilayer encapsulation for lithium microbatteries", JOURNAL OF PHYSICS D: APPLIED PHYSICS, INSTITUTE OF PHYSICS PUBLISHING, BRISTOL, GB, vol. 48, no. 39, 4 September 2015 (2015-09-04), page 395306, XP020289487, ISSN: 0022-3727, DOI: 10.1088/0022-3727/48/39/395306 [retrieved on 2015-09-04] * abstract * ----- | 1-3 | H01M4/525 H01M4/62 H01M10/052 H01M10/42 |
| X | CN 109 638 282 A (LANGFANG INST OF PROCESS ENGINEERING CAS; INST PROCESS ENG CAS) 16 April 2019 (2019-04-16) * [0073ff] * ----- | 1-3 | |

TECHNICAL FIELDS SEARCHED (IPC)

H01M
C01G

The present search report has been drawn up for all claims

| Place of search | Date of completion of the search | Examiner |
|---|---|---|
| Munich | 28 July 2023 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

21

## ANNEX TO THE EUROPEAN SEARCH REPORT
## ON EUROPEAN PATENT APPLICATION NO.

EP 23 15 5304

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2023

| Patent document cited in search report | | Publication date | Patent family member(s) | | Publication date |
|---|---|---|---|---|---|
| US 2021005888 | A1 | 07-01-2021 | CN | 112186178 A | 05-01-2021 |
| | | | JP | 7239408 B2 | 14-03-2023 |
| | | | JP | 2021012781 A | 04-02-2021 |
| | | | US | 2021005888 A1 | 07-01-2021 |
| CN 109638282 | A | 16-04-2019 | NONE | | |

For more details about this annex : see Official Journal of the European Patent Office, No. 12/82

**EP 4 246 617 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003338321 A